# EUROPEAN PATENT APPLICATION

(11) **EP 3 933 723 A1**
(43) Date of publication of application: **05.01.2022**
(21) Application number: 20183329.0
(22) Date of filing: 30.06.2020
(51) Int. Cl.: G06Q 10/02

(54) **A PROCESS AND A COMPUTER SYSTEM FOR BOOKING WORKING SEATS IN AN OFFICE**

(71) Applicant: Atos Brasil Ltda, 04578-910 São Paulo (BR)
(72) Inventor: BALDO, ALAN, 01138-010 São Paulo (BR); BENSADON, VICTOR, 05121-080 São Paulo (BR)
(74) Representative: Argyma

(57) **Abstract**

A process for booking working seats (S) in an office for a booking period by using a computer booking system (BS), an interface module (2) for generating a webpage (WP) comprising a graphical map (M) representing the different locations of the working seats (S) in the office, each working seat (S) comprising a physical tag (13) comprising a QR code defining a URL link (UL) to the computer booking system (BS), the process comprises, at the beginning of the booking period, scanning the QR code of the physical tag (13) of the booked working seat (S) to compare the ID of the working seat (S) to the booking in the database (1) and the scanning time to the starting time (T1) and the check-in time (CIT) in order to perform a physical check-in, the booking being automatically cancelled if no physical check-in is performed before the predetermined check-in time (CIT).

## Description

### TECHNICAL FIELD

The present invention relates to office organization and, more particularly, to the booking of working seats in an office.

An office comprises a limited number of available working seats (single desk, shared desk, meeting room, etc.). In modern work organization, some of the employees are working part-time at home or are visiting clients/prospects. For these reasons, the number of available working seats in an office is smaller than the total number of employees. In large cities, the cost of a working seat is becoming more and more expensive. The gap between the number of available working seats and the number of total employees is getting greater and greater. Different solutions exist for helping companies to manage the availability of working rooms in an office.

In Microsoft Outlook ^{®} software, all the meeting rooms are considered as resources and are listed with their names in the software. One solution would be to list all the working seats in the software so that an employee can book a working seat. Such a solution has many drawbacks. Firstly, the number of working seats is far greater than the number of meeting rooms and it is difficult for an employee to search in a large listing of working seats. Besides, each employee has to decide in advance which working seat he wants to use without knowing who is seated next to him. If he needs to work with a colleague, one solution is to book a meeting room but their number is limited. Another solution would be to contact his colleague to determine which working seat he had booked and book a working seat nearby. However, each working seat is identified only by a name and it is difficult to determine which working seats are nearby, especially, if the employee comes rarely to the office.

Besides, the booking of a working seat is usually made for an hour or a couple of hours. If the employee did not show up at the office, the working seat is still considered as booked by the software, forbidding other employees to use it, sometimes for several hours. The difference between the number of booked working seats and the number of occupied working seats can forbid employees to come to the office. Moreover, the number of booked working seats is not representative of the number of employees in the office and cannot be used to provide relevant information to the office manager, for example, for determining how many meals have to be prepared daily.

One objective of the present invention is to better manage the use of shared working seats in an office.

### SUMMARY

The invention relates to a process for booking working seats in an office for a booking period by using a computer booking system, the computer booking system comprising a database associating for each working seat, an ID and booking periods, an interface module for generating a webpage comprising a graphical map representing the different locations of the working seats in the office, each working seat being represented by a symbol having a first aspect when vacant and a second aspect when booked, each working seat comprising a physical tag comprising a QR code defining a URL link to the computer booking system, the URL link comprising at least the ID of the working seat, the process comprises the following steps :
- selecting, on the webpage, a booking period in order to determine the availability of the working seats in the database for said booking period, the booking period having a starting time, a finishing time and a check-in time based on the starting time,
- updating the aspects of working seats symbols on the graphical map for said booking period,
- selecting, on the graphical map, at least one available working seat in order to book said working seat for said booking period,
- at the beginning of the booking period, scanning the QR code of the physical tag of the booked working seat to connect to the computer booking system thanks to the URL link, the computer booking system comparing the ID of the working seat to the booking in the database and the scanning time to the starting time and the check-in time in order to perform a physical check-in, the booking being automatically cancelled if no physical check-in is performed before the predetermined check-in time.

Thanks to the graphical map, the booking is made visually which is easier and faster for an employee. There is no waste of working seats since the process requires a physical check-in. The booking is automatically cancelled if no physical check-in is performed before the predetermined check-in time. The vacant working seat can therefore be booked by someone else immediately. Besides, if an employee cannot be present at the office, he doesn't have any action to cancel the booking.

Preferably, the interface module forbids any remote check-in from the webpage. Therefore, the probability that a booked working seat is unoccupied is very low.

Preferably, the process comprises applying a filter to the database based on the locations of the working seats in the office so that only unfiltered working seats are available for booking, the unfiltered working seats being spaced from each other by a predetermined distance. Sanitary conditions can be directly applied by withdrawing the possibility to book a certain number of working seats. Preferably, the filtered working seats are represented by a symbol having a third aspect on the graphical map.

According to the invention, the database associating for each working seat, a name for each booking period, the process comprises the step of inputting a name in a search bar of the webpage in order to retrieve in the database the ID of the working seat associated with the name for said booking period. Thanks to the invention, an employee can book a working seat next to someone in order to work together. There is no need to book a meeting room each time colleagues need to interact together.

Preferably, a device being used for scanning the QR code of the physical tag, the location of the device is compared to the location of the booked working seat in order to check-out if the distance between the device and the location of the booked working seat is greater than a predetermined distance. The check-out is made automatically if an employee goes too far from is working seat, for example, for a duration which is greater than a predetermined duration. Therefore, the probability that a booked working seat is unoccupied is very low. The employee can check-out very easily, just by leaving the working seat.

The invention relates also to a computer booking system for booking working seats in an office for a booking period, the computer booking system comprising a database associating for each working seat, an ID and booking periods, an interface module configured for generating a webpage comprising a graphical map representing the different locations of the working seats in the office, each working seat being represented by a symbol having a first aspect when vacant and a second aspect when booked, each working seat comprising a physical tag comprising a QR code defining a URL link to the computer booking system, the URL link comprising at least the ID of the working seat, the computer booking system being configured to :
- select, on the webpage, a booking period in order to determine the availability of the working seats in the database for said booking period, the booking period having a starting time, a finishing time and a check-in time based on the starting time,
- update the aspects of working seats symbols on the graphical map for said booking period,
- select, on the graphical map, at least one available working seat in order to book said working seat for said booking period,
- at the beginning of the booking period, after scanning the QR code of the physical tag of the booked working seat to connect to the computer booking system thanks to the URL link, compare the ID of the working seat to the booking in the database and the scanning time to the starting time and the check-in time in order to perform a physical check-in, the booking being automatically cancelled if no physical check-in is performed before the predetermined check-in time.

Preferably, the computer booking system comprises at least a check-in module configured to compare the ID of the working seat and the scanning time to the starting time and the check-in time in order to perform a physical check-in, the computer booking system comprising at least one welcome station at the entrance of the office, the welcome station is configured to connect to the check-in module in order to perform the check-in of any working seat. A welcome station is a back-up solution for the employees when a difficulty to perform the physical check-in occurs.

Preferably, the welcome station is configured to provide guidance from the welcome station to the booked working seat.

### BRIEF DESCRIPTION OF THE DRAWINGS

The invention will be better understood on reading the description that follows, given uniquely as an example, and by referring to the appended figures in which:
Figure 1 is a web page comprising a graphical map representing the location of the working seats.
Figure 2 is representation of a shared desk comprising several working seats.
Figure 3 is a schematic illustration of a booking system according to the invention.
Figure 4 is a schematic illustration of the physical check-in step by scanning a QR Code at the working seat.
Figure 5 is a schematic illustration of a welcome station located at an entrance of the office.
Figures 6A, 6B and 6C are schematic illustrations representing respectively working seats fully vacant, partially occupied and partially blocked.
It should be noted that the figures set out the invention in a detailed manner to implement the invention, said figures obviously being able to serve to better define the invention if need be.

### DETAILED DESCRIPTION

The present invention relates to a booking system and to a process for booking working seats in an office in order for the office to be a digital place.

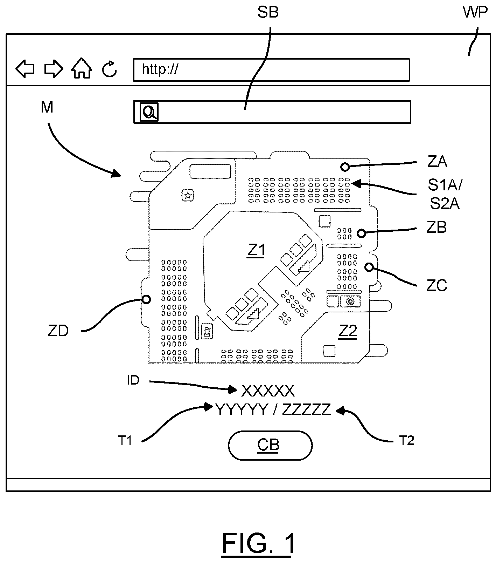

In this example, the office comprises only one floor but the invention applies similarly to an office having multiple floors. The floor is represented by a graphical map M on figure 1 which will be described later in details. In this example, the floor comprises elevators Z1 located centrally and a cafeteria Z2 located on the south-east corner. The floor comprises also a number of working seats S which are distributed in the office according to different areas ZA-ZD. In the present example, the office comprises 4 different working areas ZA-ZD.

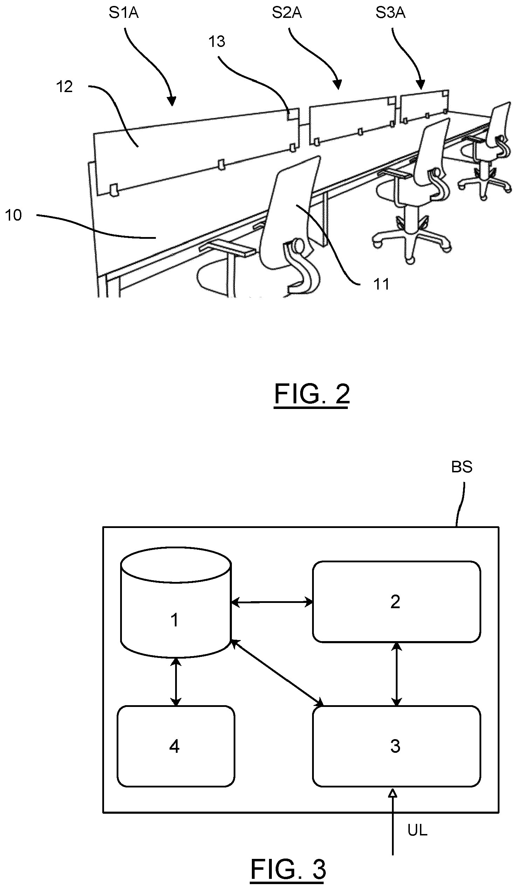

According to the invention, a working seat S can be a single desk, a seat on a shared desk, a seat in a meeting room, etc. With reference to figure 2, it is represented a shared desk from the working area A of the office. The shared desk comprises 3 working seats S1A-S3A. Each working seat S1A-S3A comprises a desk 10 and a chair 11. Preferably, each working seat S comprises a vertical front panel 12 which is used as separator. Optionally, a working seat S can also comprise a screen to be connected to a laptop.

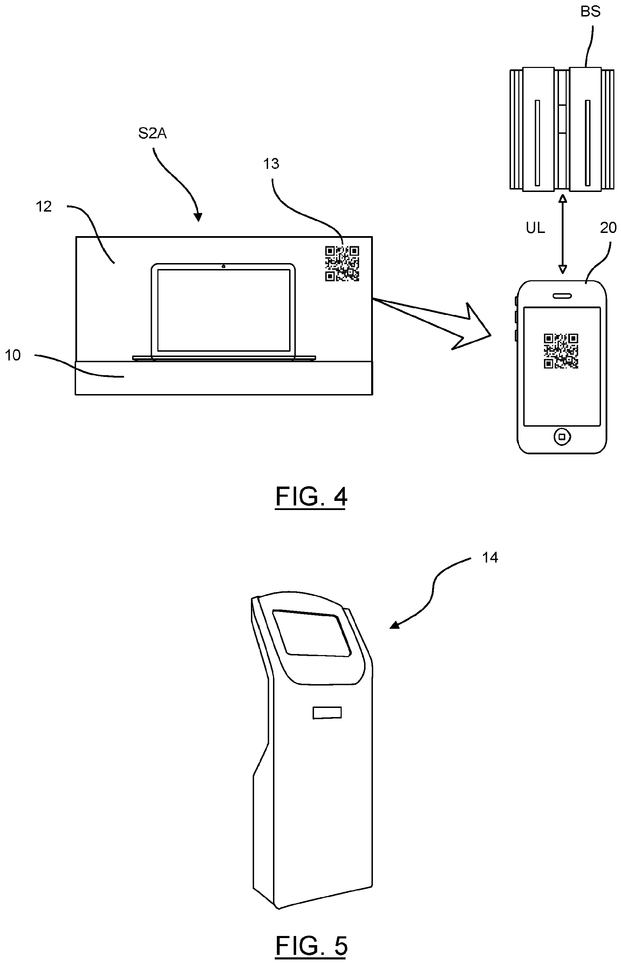

According to the invention, each working seat S comprises a physical label 13 (Figure 4) comprising a QR code corresponding to an ID of the working seat S. The label 13 is preferably glued to the working seat S, preferably on the vertical front panel 12, in order to be clearly visible. A QR code can be read easily by a variety of electronic devices, in particular, smartphones. The use of QR codes will be described later.

In this example, the ID of the working seat S is a composite ID and comprises a reference to the working area (Working area A in this example) and a number. The ID of the working seat S can be selected freely. The only requirement is that all ID are different.

With reference to figure 3, a booking system BS according to the invention will be now presented. The booking system BS is a cloud-based software comprising a database 1 connected to an interface module 2, a check-in module 3 and an analysis module 4.

In the database 1, each working seat S is associated at least with an ID and the period of times when the working seat S is occupied called thereafter "a booking". Preferably, a booking can comprise information regarding the organizer, the occupant or special needs. The database 1 can also comprise specific information for each working seat S, for example, the presence of a screen. Preferably, each working seat S is associated in the database 1 with the working area.

The interface module 2, connected to the database 1, is configured to generate web page WP (Figure 1) which is accessible through any device having a web browser such as a smartphone or a computer. Preferably, the access to the interface module 2 requires credentials (email, login, password) which won't be presented in details.

The web page WP comprises a graphical map M representing the different locations of the working seats S in the office, each working seat S being represented by a symbol having a first aspect when available and a second aspect when occupied.

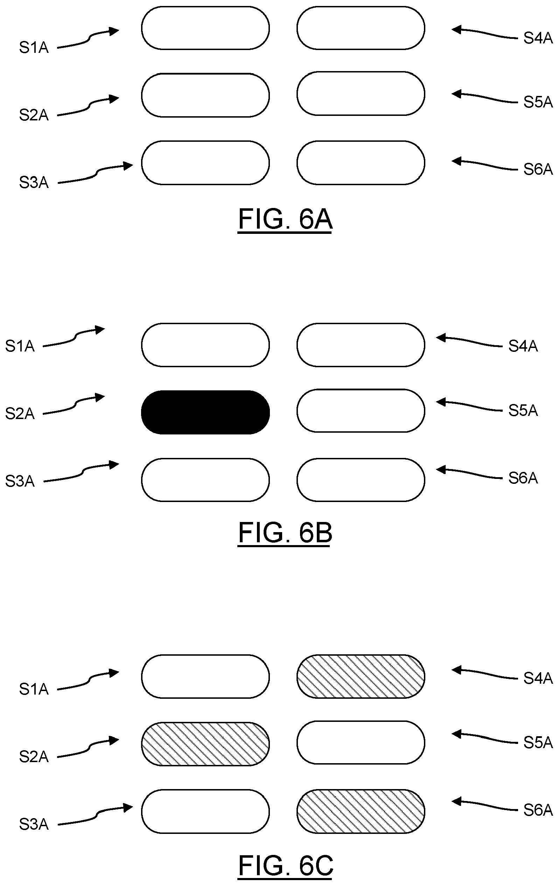

Figure 6A represents the shared desk of Figure 2 in the graphical map M with the working seats S1A-S6A. In this example, the symbols are all blanks because the working seats S1A-S6A are all vacant. In figure 6B, the only the working seat S4A is occupied and its symbol is colored in black. In this example, only the color is modified but different parameters could be modified such as the shape, the size, etc. it is only important that the employee can identify visually and clearly if the working seat S can be booked.

The graphical map M is advantageous in comparison to a listing since the employee can visually locate the working seat in the office which is convenient if he wants to seat next to someone of its team.

The interface module 2 is also configured to input data into the database 1 in order for an employee to book a working seat S and manage its booking. The webpage WP comprises an input module to select the booking period (starting time T1, finishing time T2). The working seat S can be selected directly by pointing on the symbol of said working seat S on the graphical map M to obtain its ID. As represented in figure 1, the webpage WP comprises a confirmation button CB to confirm the booking (working seat ID, starting time T1, finishing time T2) which will be saved in the database 1.

The check-in module 3 is configured to perform the physical check-in. In this example, the check-in module 3 is configured to receive a URL link UL generated by the scanning of the QR code associated with the ID of the working seat S. Preferably, the check-in module 3 comprises a clock to determine if the check-in is performed at the right moment. Alternatively, the URL link UL can also comprise a time stamp corresponding to the scanning time.

Thanks to the invention, the check-in module 3 accepts only physical check-in when the employee is at its working seat S or at a welcome station 14 (presented later). Preferably, there is no possibility to check-in virtually by only using the webpage WP of the interface module 2.

As it has been presented previously, thanks to the graphical map M, the booking system S allows an employee to identify visually the location of the different working seats S. This feature is very interesting when coupled to the possibility to search for colleagues.

As represented in figure 1, the webpage WP comprises a search bar SB in which the employee can search for a colleague by inputting his name. The search request retrieves from the database 1 the ID of the working seat S associated to said colleague (if any). The aspect of the symbol of said working seat S is modified so that the employee can visually identify where his colleague will be seated (which area, which working seat) so that he can book a working seat S next to him in order to better interact.

The process will be presented for an employee who is working from home several days a week and needs to work at the office on a particular day, for example on June 10th between 8am and 11am.

In this example, the employee owns a smartphone and accesses the web page WP of the interface module 2 through internet by an URL.

As represented on figure 1, the graphical map M is displayed on the web page WP so that the employee can see if any working seat S is currently vacant in a specific working area ZA-ZD. Through the web page WP, the employee can select a booking period by inputting a starting time T1 (June 10^{th}, 8am) and a finishing time T2 (June 10^{th}, 11am).

When selecting the booking period, a time filter, corresponding to the booking period, is applied on the database 1 in order to determine the status of each working seat S. The aspects of the working seats symbols are then updated on the graphical map M for said booking period. The occupied working seats S are colored in black in this example (see figure 6B).

The employee can easily determine which working seats S are available during the booking period. Advantageously, the employee can see who are the colleagues on each occupied working seat S by just clicking on a working seat symbol. If the employee is looking for a specific colleague, he can just input his name in the search bar SB. Thanks to this feature, an employee can choose a vacant working seat S next to a selected colleague if he wants to interact with him.

The selection of the working seat S is made by clicking on the symbol of a vacant working seat, for example, the working seat S2A. After confirmation, the working seat S2A (ID = 2A) is booked in the database 1 for said booking period.

According to the present invention, the booking system BS determines a check-in time CIT based on the starting time T1 of the booking. In this example, the check-in time CIT corresponds to the starting time T1 at which a grace period has been added, for example, 15 minutes. In this example, the check-in time CIT is 8.15am.

Preferably, after confirmation, an email is sent by the booking system BS to the employee in order to give him full details on the booking, working seat ID, starting time T1, finishing time T2, check-in time CIT. Through the webpage WP, the employee has the ability to manage the booking (update, cancel, etc.). However, he has not the ability to perform a check-in.

In the present example, it is presented a booking of one working seat S. However, several working seats S can be booked during the same booking. Preferably, the employee can input the name of the employee/guest for each working seat S booked.

On the due date (June 10th), the employee goes to the office and, more particularly, to the booked working seat S2A. The employee locates the QR code tag 13 and reads it with its smartphone 20 (Figure 4). The QR code corresponds to a check-in URL UL which connects to the check-in module 3 of the booking system BS.

In this example, the check-in URL UL comprises the working seat ID and a time stamp corresponding to the scanning time. The smartphone 20 accesses the booking system BS and compares the working seat ID with the one corresponding to the booking and the time stamp to verify that it is after the starting time T1 and before the check-in time CIT. If it corresponds, the check-in is confirmed.

Advantageously, the booking is automatically cancelled by the check-in module 3 if no physical check-in is performed before the predetermined check-in time CIT (8.15 am). Thanks to this feature, the booking is confirmed only when the employee is really present. Only physical check-in is possible in order to avoid booking of working seats S when the employee didn't show. This is also advantageous for the employee since he has nothing to do to cancel the working seat, the cancellation being automatic. The database 1 is automatically updated after cancellation.

Thanks to the invention, the working seats S of an office can be used more efficiently.

When the booking time is up, check-out is carried out automatically. Advantageously, the employee can perform a check-out at any time through the interface module 2 so other employees would be able to take the working seat S if it was released earlier than planned.

Advantageously, a check-in can pe performed directly without prior booking if the working seat S is vacant during a predetermined amount of time, for example, an hour.

According to an aspect of the invention, the booking system BS retrieves the employee's location of the scanning device (GPS location for example) to validate if the check-in may be performed by comparing the employee location and the working seat S location. In this case, each working seat S is associated with a geolocation in the database 1. Preferably, if an employee moves away from the working seat S with his smartphone 20, the booking system BS notifies the employee that an automatic check-out will be performed if the employee does not take an action to keep his booking active. The automatic check-out is preferably performed after a predetermined period of time outside from a perimeter determined at a predetermined distance from the working seat S2A.

Preferably, the booking system BS comprises an analysis module 4 (Figure 3) configured to analyze the database 1 an determine trends in the utilization of the working seats S in the office so that the office manager can better organize the number, the type and the location of the working seats S in the office. The analysis module 4 can determine effectively the food demand at the cafeteria so that, in one hand, each employee will be able to have a meal and, in the other hand, no food is wasted. The analysis module 4 runs preferably a machine learning algorithm or statistic algorithm. Such analysis module 4 is relevant because it takes into account the bookings but also the actual check-ins. The data of the database 1 are not biased by the fact that an employee doesn't show up at his working seat S. This feature is very advantageous for large entities in which a better prediction can have a big impact on resources.

According to an aspect of the invention, the analysis module 4 enables to charge the cost center attached to each employee corresponding to the effective use of the office resources.

Preferably, the office comprises one or several welcome stations 14 (Figure 5), connected to the booking system BS, at the entrances of the office, in order to provide guidance for the employee to the booked working seat S2A. As represented on figure 5, the welcome station 14 is a totem touch screen on which the employee can enter its working seat ID or a personalized code obtain at the time of the booking to be guided from the welcome station 14 to its working seat S2A.

In a preferred embodiment, the welcome station 14 is configured to perform the check-in of any working seat S by scanning a QR Code present on the welcome station 14 or by inputting a personalized code obtain at the time of the booking. An employee who has a smartphone problem or who is lost in the office can perform the physical check-in.

Meeting rooms may have a dedicated meeting station connected to the booking system BS, improving the usability and providing an easy way to identify if a room is available at the moment. Preferably, the screen color changes depending on the availability. It also provides a great way to control meeting rooms usage by enforcing the check-in rule, freeing up the room if the booking owner does not confirm the booking with the check-in. It is also possible to automatically personalize the room's screen according to the event, displaying a welcome message to a customer visiting the site and using the customer's colors for example.

According to one aspect of the invention, an office manager can filter the database 1 based on the physical locations of the working seats S in the office so that only unfiltered working seats S are available for booking, the unfiltered working seats S being spaced from each other by a predetermined distance.

Preferably, the office manager determines one or several filters based on different predetermined distances. As represented on figure 6C, the filter is based on a distance of 1m so that all unfiltered working seats S are spaced from each other at least by one meter. Thanks to this feature, all single desks remain unfiltered whereas half of the working seats S on a shared desk are filtered as represented on figure 6C (blocked working seats are colored in grey). This feature is advantageous in case of viral contamination so that the office is dynamically adapted to respect sanitary restrictions. The filters are selected by the office manager depending on the current sanitary restrictions. The social distance can be adapted dynamically by the office manager.

According to an embodiment, the booking system can prohibit any check-in if the working seat S hasn't been cleaned and sterilized after a previous check-out. Preferably, the office manager is in contact with the cleaning team in order to inform them of the workings seats S which have been recently checked out and to input in the booking systems the workings seats S which have been cleaned. The sanitary conditions can be perfectly respected so that each employee can work safely.

## Claims

1. A process for booking working seats (S) in an office for a booking period by using a computer booking system (BS), the computer booking system (BS) comprising a database (1) associating for each working seat (S), an ID and booking periods, an interface module (2) for generating a webpage (WP) comprising a graphical map (M) representing the different locations of the working seats (S) in the office, each working seat (S) being represented by a symbol having a first aspect when vacant and a second aspect when booked, each working seat (S) comprising a physical tag (13) comprising a QR code defining a URL link (UL) to the computer booking system (BS), the URL link (UL) comprising at least the ID of the working seat (S), the process comprises the following steps :
- selecting, on the webpage (WP), a booking period in order to determine the availability of the working seats (S) in the database (1) for said booking period, the booking period having a starting time (T1), a finishing time (T2) and a check-in time (CIT) based on the starting time (T1),
- updating the aspects of working seats symbols on the graphical map (M) for said booking period,
- selecting, on the graphical map (M), at least one available working seat (S) in order to book said working seat (S) for said booking period,
- at the beginning of the booking period, scanning the QR code of the physical tag (13) of the booked working seat (S) to connect to the computer booking system (BS) thanks to the URL link (UL), the computer booking system (BS) comparing the ID of the working seat (S) to the booking in the database (1) and the scanning time to the starting time (T1) and the check-in time (CIT) in order to perform a physical check-in, the booking being automatically cancelled if no physical check-in is performed before the predetermined check-in time (CIT).

2. A process according to claim 1, wherein the interface module (2) forbids any remote check-in from the webpage (WP).

3. A process according to any one of claims 1 to 2, comprises applying a filter to the database (1) based on the locations of the working seats (S) in the office so that only unfiltered working seats (S) are available for booking, the unfiltered working seats (S) being spaced from each other by a predetermined distance.

4. A process according to claim 3, wherein the filtered working seats are represented by a symbol having a third aspect on the graphical map (M).

5. A process according to any one of claims 1 to 4, wherein the database (1) associating for each working seat (S), a name for each booking period, the process comprises the step of inputting a name in a search bar (SB) of the webpage (WP) in order to retrieve in the database (1) the ID of the working seat (S) associated with the name for said booking period.

6. A process according to any one of claims 1 to 5, wherein, a device (20) being used for scanning the QR code of the physical tag (13), the location of the device (20) is compared to the location of the booked working seat (S) in order to check-out if the distance between the device (20) and the location of the booked working seat (S) is greater than a predetermined distance.

7. A computer booking system (BS) for booking working seats (S) in an office for a booking period, the computer booking system (BS) comprising a database (1) associating for each working seat (S), an ID and booking periods, an interface module (2) configured for generating a webpage (WP) comprising a graphical map (M) representing the different locations of the working seats (S) in the office, each working seat (S) being represented by a symbol having a first aspect when vacant and a second aspect when booked, each working seat (S) comprising a physical tag (13) comprising a QR code defining a URL link (UL) to the computer booking system (BS), the URL link (UL) comprising at least the ID of the working seat (S), the computer booking system (BS) being configured to :
- select, on the webpage (WP), a booking period in order to determine the availability of the working seats (S) in the database (1) for said booking period, the booking period having a starting time (T1), a finishing time (T2) and a check-in time (CIT) based on the starting time (T1),
- update the aspects of working seats symbols on the graphical map (M) for said booking period,
- select, on the graphical map (M), at least one available working seat (S) in order to book said working seat (S) for said booking period,
- at the beginning of the booking period, after scanning the QR code of the physical tag (13) of the booked working seat (S) to connect to the computer booking system (S) thanks to the URL link (UL), compare the ID of the working seat (S) to the booking in the database (1) and the scanning time to the starting time (T1) and the check-in time (CIT) in order to perform a physical check-in, the booking being automatically cancelled if no physical check-in is performed before the predetermined check-in time (CIT).

8. A computer booking system (BS) according to claim 7 comprising at least a check-in module (3) configured to compare the ID of the working seat (S) and the scanning time to the starting time (T1) and the check-in time (CIT) in order to perform a physical check-in, the computer booking system (BS) comprising at least one welcome station (14) at the entrance of the office, the welcome station (14) is configured to connect to the check-in module (3) in order to perform the check-in of any working seat (S).

9. A computer booking system (BS) according to claim 8, wherein the welcome station (14) is configured to provide guidance from the welcome station (14) to the booked working seat (S).
